# EUROPÄISCHE PATENTSCHRIFT

(11) **EP 0 593 691 B1**
(45) Veröffentlichungstag und Bekanntmachung des Hinweises auf die Patenterteilung: **11.09.1996**
(21) Anmeldenummer: 93903902.0
(22) Anmeldetag: 04.02.1993
(51) Int. Cl.: B22F 3/12, B22F 5/00, B22F 7/06

(54) **VERFAHREN ZUR HERSTELLUNG GESINTERTER BAUTEILE**
PROCESS FOR PRODUCING SINTERED COMPONENTS
PROCEDE DE FABRICATION DE COMPOSANTS FRITTES

(30) Priorität: 19.02.1992 DE 4204948
(43) Veröffentlichungstag der Anmeldung: 27.04.1994
(73) Patentinhaber: SINTERMETALLWERK KREBSÖGE GMBH, D-42477 Radevormwald (DE)
(72) Erfinder: WEBER, Manfred, D-5810 Witten 3 (DE)
(74) Vertreter: Maxton, Alfred, Dipl.-Ing.
(86) Internationale Anmeldenummer: EP9300247
(87) Internationale Veröffentlichungsnummer: WO9316831

(56) Entgegenhaltungen:
- US-A- 5 051 232

## Beschreibung

Die Erfindung betrifft ein Verfahren zur Herstellung eines gesinterten Pleuls mit geteiltem Pleulkopf, wobei das Pleul aus Pulver gepreßt, gesintert, abgekühlt und ohne weiter Verdichtung in seine Einzelteile getrennt wird.

Ein solches Pleuel besteht aus einem Lagerdeckel und dem übrigen Pleuel, wobei diese beiden Einzelteile durch Pleuelschrauben miteinander verbunden werden.

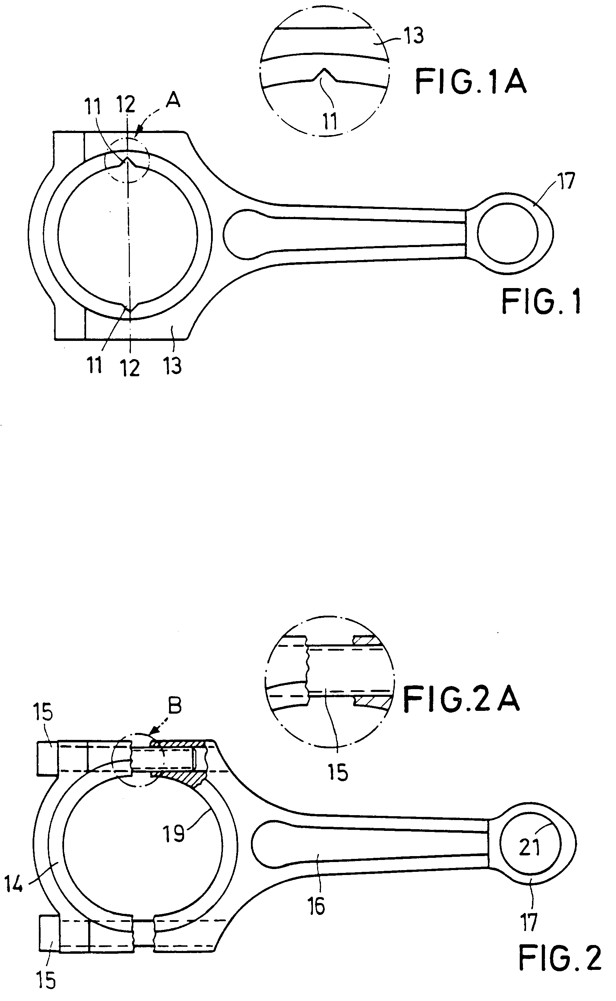

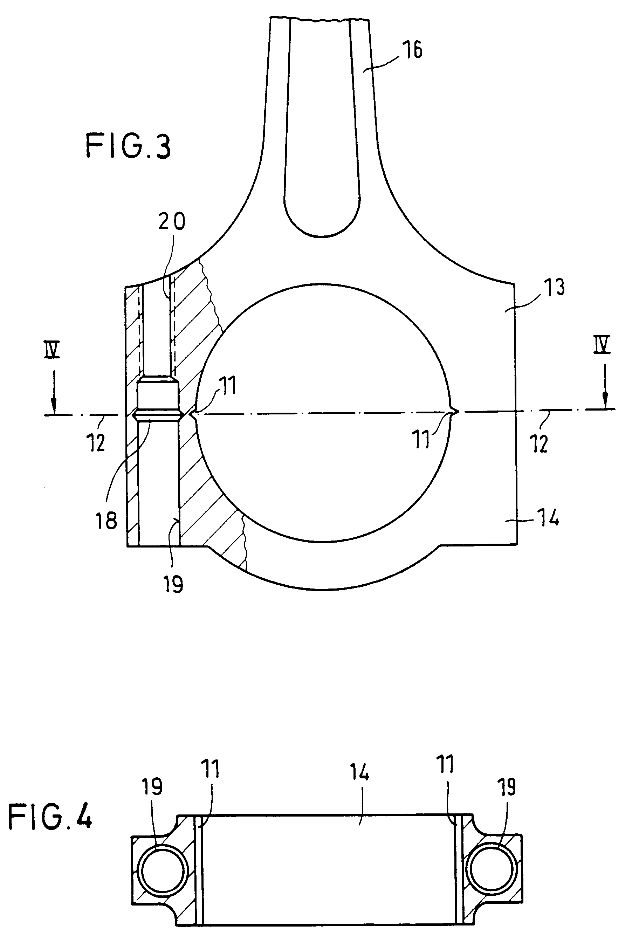

Es ist ein Verfahren der eingangs genannten Gattung bekannt, bei dem das Pleul mit Aufmaß aus Pulver gepreßt wird (Metal Powder Report, Band 43, Nr. 5 , erschienen Mai 1988, MPR Publishing Services Limited, Shrewsbury, Großbritannien, C. M. SONSINO, "Fatigue Design of Sintered Connecting Rods", Seite 332-337 * Seite 337, Fig. 8 und linke Spalte *). Dabei wird im Bereich der zukünftigen Trennfuge zwischen den beiden Einzelteilen ein zusätzliches Aufmaß vorgesehen, Nach dem Abkühlen folgt die Trennung des Bauteils in seine Einzelteile. Dies geschieht durch mechanische Bearbeitung in der Weise, daß die Einzelteile in der Trennfuge durch Sägen voneinander getrennt werden. Das zusätzliche Aufmaß in diesem Bereich wird durch das Sägen weitgehend beseitigt. Anschließend ist es notwendig, die Trennflächen der Einzelteile zu bearbeiten. Je nach Bedarf ist es dabei erforderlich, eine passungsgenaue Bearbeitung folgen zu lassen, beispielsweise durch Schleifen.

Dieses bekannte Verfahren erfordert durch das zusätzliche Aufmaß im Bereich der Trennfuge den Einsatz von Werkstoff, welcher später beim Sägen beseitigt wird. Das Sägen und die Nachbearbeitung, beispielsweise das Schleifen, verlangen einen erheblichen Aufwand an Zeit und Kosten. Zwangsläufig verursachen derartige Bearbeitungen und Nachbearbeitungen auch Ausschuß. Alle diese Nachteile wiegen besonders schwer, wenn Massenprodukte hergestellt werden.

In der EP-A-330 830 ist ein Verfahren zur Herstellung eines pulvergeschmiedeten Pleuels offenbart. Bei einem Bauteil, welches seine Endform durch sogenanntes "Pulverschmieden" erhält, wird dessen Enddichte in zwei formenden Stufen erhalten, wobei durch den Schmiedeschritt nahezu die theoretische Enddichte des Materials erreicht wird. Derartige Pleuel sind aufwendig und teuer in der Herstellung, zumal die Oberfläche des Pleuels nach dem Schmieden nachbehandelt werden muß.

Die Erfindung geht von der Erkenntnis aus, daß bei der Herstellung von Massenartikeln, beispielsweise von Bauteilen für Kraftfahrzeugmotoren, jede Optimierung des Herstellungsverfahrens die gewerbliche Anwendbarkeit entscheidend verbessert. So liegt der Erfindung die Aufgabe zugrunde, das bekannte Verfahren zu verbessern und ein Verfahren vorzuschlagen, bei dem mit möglichst wenigen Bearbeitungsschritten ein qualitativ wertvolles Bauteil hergestellt wird, das aus passungsgenauen Einzelteilen besteht.

Diese Aufgabe wird gemäß der Erfindung durch die Merkmale des Anspruchs 1 gelöst.

Dabei dient die Trennkerbe zur Einleitung des Bruches und Bestimmung der Trennfläche. Der Verlauf der Trennfläche kann dadurch präziser bestimmt werden, daß gemäß der Erfindung im Bereich der gewünschten Trennfläche und im Abstand von der Trennkerbe zumindest eine Verlaufskerbe vorgesehen wird. Dies führt dazu, daß sich der Bruch von der Trennkerbe zur Verlaufskerbe erstreckt. Dadurch ist die Lage der Trennfläche eindeutig bestimmbar, da der Verlauf des Bruches während der Trennung, und damit die Richtung seiner Ausbreitung, durch die Anordnung der Verlaufskerbe vorgegeben wird.

Hinzu kommt, daß für die Trennung weniger Arbeit aufgewandt werden muß als bei dem bekannten Verfahren und die Wahrscheinlichkeit vermindert wird, daß beim Trennen in dem Trennflächen Verformungen auftreten. Bei der Trennung des Pleuls gemäß der Erfindung wird kein Werkstoff durch mechanische Bearbeitung verbraucht. Es entsteht eine Trennfläche, die keiner Bearbeitung bedarf, da sie passungsgenau ist. Ohne weiteres können zwei benachbarte Einzelteile an ihren Trennflächen wieder passend zusammengesetzt werden. Diese Trennflächen weisen gegenüber den mechanisch bearbeiteten gemäß dem bekannten Verfahren den wesentlichen Vorteil auf, daß ihre Oberfläche um ein vielfaches größer ist. Dadurch wird die Belastbarkeit des Pleuels erhöht. Beachtlich sind weiterhin die Ersparnis von Zeit- und Kostenaufwand, da das Trennen durch Bruch mit wesentlich einfacheren Mitteln ausgeführt werden kann als die mechanische Bearbeitung gemäß dem bekannten Verfahren.

Ein weiteres Merkmal der Erfindung besteht darin, daß eine verhältnismäßig große Dichte von 6,6 bis 7,4 g/cm³ erzielt werden kann. Eine durchschnittliche Dichte von 6,8 bis 7,2 g/cm³ ist also ohne weiteres erreichbar. Eine solche Dichte, bis etwa 7,4 g/cm³, genügt durchaus für ein Pleul, an das höhere Anforderungen gestellt werden wie beispielsweise an das für einen Kraftfahrzeugmotor bestimmte Pleuel. Dort werden zwar auch Pleuel mit höheren Dichten eingesetzt, die beispielsweise größer als 7,7 g/cm³ sind. Solche Hochleistungs-Pleuel müssen aber keineswegs in allen Fällen eingesetzt werden, und es sind übliche Anwendungen möglich, bei denen eine Dichte genügt, die kleiner als etwa 7,6 g/cm³ ist. Wenn nämlich höhere Dichten als diejenigen gemäß der Erfindung erreicht werden sollten, müßten aufwendigere Verfahren angewandt werden, bei denen auf den Verfahrensschritt des Schmiedens nicht verzichtet werden könnte. Demgegenüber wird gemäß der Erfindung vorgeschlagen, eine geringere Dichte vorzusehen mit einer daraus folgenden größeren Restporösität, die sich günstig auf den Vorgang des Trennens durch Bruch auswirkt. Wenn dadurch zwar etwas größere Abmessungen des Pleuls die Folge sind, wiegt demgegenüber der Vorteil eines erheblich einfacheren Verfahrens wesentlich schwerer.

Das Verfahren kann gemäß der Erfindung dadurch ausgestaltet werden, daß während des Pressens das Pleul mit zumindest einer Trenn- bzw. einer Verlaufskerbe versehen wird. Hierzu können die Formen für die Kerben im Preßwerkzeug vorgesehen werden. In weiterer Ausgestaltung der Erfindung kann das Pleul mit zumindest je einer Trenn- bzw. Verlaufskerbe aber auch zwischen dem Pressen und dem Sintern durch mechanische Bearbeitung versehen werden.

Gemäß einer bevorzugten Ausgestaltung der Erfindung wird das Pleul unmittelbar aus der Sinterhitze abgekühlt und dann durch mechanische Bearbeitung mit zumindest je einer Trenn- bzw. Verlaufskerbe versehen. Beispielsweise kann die Wärmebehandlung, nämlich die Abkühlung, aus einer Sinterhitze von etwa 1.100 °C erfolgen. Dieses Verfahren ermöglicht eine besonders kostengünstige Herstellung von Pleueln.

Gemäß einer anderen Ausgestaltung der Erfindung wird das Pleul nach dem Sintern zwischenabgekühlt, kalibriert, wärmebehandelt und endabgekühlt. Diese Ausgestaltung der Erfindung schließt also außer der Wärmebehandlung des Endabkühlens ein Zwischenabkühlen und eine weitere Wärmebehandlung ein. Diese kann in einem erneuten Erwärmen des Bauteils auf 800 bis 1.100 °C bestehen. Erst dann erfolgt die Wärmebehandlung des Endabkühlens. Diese kann, ebenso wie das Zwischenabkühlen, durch Luft, Öl, Schutzgas oder Wasser erfolgen.

Bei dem Verfahren unter Einschluß des Kalibrierens entstehen zwar größere Kosten als bei einem Verzicht auf das Kalibrieren. Jedoch können durch das Kalibrieren eine größere Dichte und günstigere mechanische Eigenschaften erreicht werden. Die Erhöhung der Dichte ist bis in den oberen Bereich der vorstehend angegebenen Werte möglich. Andererseits ist es bei einem Verzicht auf das Kalibrieren möglich, die geringere Festigkeit durch eine Vergroßerung der kritischen Querschnitte auszugleichen. Die daraus folgende Gewichtserhöhung nimmt nicht den wirtschaftlichen Vorteil, der sich aus dem Verzicht auf das Kalibrieren ergibt. Hieran ändern auch nichts die größeren Toleranzen, die gegenüber dem Verfahren unter Einschluß des Kalibrierens einen Mehraufwand an mechanischer Bearbeitung erfordern.

Bei dem Verfahren unter Einschluß des Kalibrierens kann das Pleul entweder nach dem Sintern oder nach dem Kalibrieren oder auch nach dem Endabkühlen durch mechanische Bearbeitung mit zumindest je einer Trenn- bzw. Verlaufskerbe versehen werden. Die Kerben können beispielsweise durch Fräsen, Räumen oder Stoßen hergestellt oder auch mittels eines Laserstrahles eingeschweißt werden. Je nach dem herzustellenden Pleul werden eine oder mehrere Trenn- bzw. Verlaufskerben an den zur Trennung geeigneten Stellen angebracht.

Beim Bruch wird dann zwischen zwei Einzelteilen eine Trennfläche erzeugt. Hierzu können Zug-, Druck- und/oder Biegebeanspruchungen aufgebracht werden. Diese greifen an geeigneten Stellen des Pleuels an.

Wenn in weiterer Ausgestaltung der Erfindung die Temperatur des Pleuels beim Trennen niedriger als die Raumtemperatur oder ihr höchstens gleichgehalten wird, kann das Trennen dadurch verbessert werden, da die Wahrscheinlichkeit von Verformungsbrüchen vermindert wird. Das Bruchverhalten wird also spröder. Gemäß einer bevorzugten Ausgestaltung der Erfindung wird nicht die Temperatur des gesamten Pleuels beim Trennen niedrigem als die Raumtemperatur gehalten; vielmehr wird das Pleul lediglich an der gewünschten Trennfläche vor dem Trennen teilweise gekühlt. Dies erfordert einerseits einen wesentlich geringeren Aufwand zur Kühlung als bei vollständiger Kühlung des Pleuels. Andererseits entsteht dann auch nicht unerwünschtes Kondenswasser. Die teilweise Kühlung im Bereich der gewünschten Trennfläche hat zur Folge, daß dort die Kerbschlagzähigkeit vermindert wird, so daß eine geringere Verformungsarbeit aufgebracht werden muß. Bei metallischen Bauteilen, die eine verhältnismäßig hohe Wärmeleitfähigkeit besitzen, tritt die Kühlung rasch in den gewünschten Bereichen ein. Dadurch werden Verformungsbrüche vermieden und Sprödbrüche ermöglicht. Dies kann dadurch gefördert werden, daß die Trennung mit verhältnismäßig hoher Geschwindigkeit erfolgt.

Im übrigen ist es zweckmäßig, das Pleuel vor dem Sintern auszuwiegen. Das Auswiegen ist erforderlich, wenn vorgegebene Toleranzen der Sektionsgewichte eingehalten werden müssen. Weiterhin ist der Vollständigkeit halber darauf hinzuweisen, daß dem zu pressenden Pulver ein Gleitmittel beigegeben werden kann, das während des Sinterns ausgebrannt wird. Die Sinterung folgt dann unter Schutzgas.

Zur Herstellung des Pleuels wird gemäß der Erfindung die Trennstelle im Bereich zwischen dem Lagerdeckel des Pleuelkopfes und dem übrigen Pleuel angeordnet. Nachdem das Pleuel gepreßt, gesintert und abgekühlt worden ist, können gemäß einer Ausgestaltung der Erfindung im Pleuelkopf die Löcher für die Pleuelschrauben angefertigt, sodann die Pleuelschrauben und Pleuelmuttern lose in den Löchern montiert und anschließend die Trennfläche in der Trennfuge des Pleuelkopfes durch Bruchtrennung erzeugt werden. Dazu muß die lose Montage der Pleuelschrauben und Pleuelmuttern so bemessen sein, daß genügend Trennweg vorhanden ist, um beide Einzelteile voneinander zu trennen. Diese Verfahrensweise hat die Vorteil, daß beide Einzelteile nach dem Trennen eindeutig einander zugeordnet bleiben. Ein Vertauschen mit anderen Paarungen von Lagerdeckel mit übrigem Pleuel ist ausgeschlossen.

Die Trennung der beiden Einzelteile des Pleuels kann dadurch erfolgen, daß in den Pleuelkopf ein Trennwerkzeug eingeführt wird. Hierbei kann es sich beispielsweise um einen Spreizkopf, eine Keilvorrichtung od. dgl. handeln.

An das Trennen kann sich in weiterer Ausgestaltung der Erfindung die spanende Nachbearbeitung des Pleuels anschließen, insbesondere des Lagers des Pleuelkopfes und des Pleuelauges. Vor der spanenden Nachbearbeitung des Pleuelkopfes werden zweckmäßig die Pleuelschrauben und Pleuelmuttern fest miteinander montiert.

## Patentansprüche

1. Verfahren zur Herstellung eines gesinterten Pleuels mit geteiltem Pleuelkopf, wobei das Pleuel aus Pulver gepreßt, gesintert, abgekühlt und ohne weitere Verdichtung in seine Einzelteile getrennt wird, wobei das Pleuel an der Trennstelle im Bereich des Pleuelkopfes mit zumindest einer Trennkerbe versehen und durch Bruch an der Trennstelle in seine Einzelteile getrennt wird.

2. Verfahren nach Anspruch 1, dadurch gekennzeichnet, daß im Bereich der gewünschten Trennfläche und im Abstand von der Trennkerbe (11) zumindest eine Verlaufskerbe (18) vorgesehen wird.

3. Verfahren nach Anspruch 1 oder 2, dadurch gekennzeichnet, daß das Pleul beim Pressen mit zumindest einer Trenn(11) bzw. einer Verlaufskerbe (18) versehen wird.

4. Verfahren nach Anspruch 1 oder 2, dadurch gekennzeichnet, daß das Pleul zwischen Pressen und Sintern durch mechanische Bearbeitung mit zumindest je einer Trenn- (11) bzw. Verlaufskerbe (18) versehen wird.

5. Verfahren nach Anspruch 1 oder 2, dadurch gekennzeichnet, daß das Pleul nach dem Sintern durch mechanische Bearbeitung mit zumindest je einer Trenn- (11) bzw. Verlaufskerbe (18) versehen wird.

6. Verfahren nach Anspruch 1 oder 2, dadurch gekennzeichnet, daß das Pleul nach dem Sintern zwischenabgekühlt, kalibriert, wärmebehandelt und endabgekühlt wird.

7. Verfahren nach Anspruch 6, dadurch gekennzeichnet, daß das Pleul nach dem Kalibrieren auf 800 bis 1.100 °C erwärmt und dann endabgekühlt wird.

8. Verfahren nach Anspruch 6 oder 7, dadurch gekennzeichnet, daß das Pleul nach dem Sintern durch mechanische Bearbeitung mit zumindest je einer Trenn- (11) bzw. Verlaufskerbe (18) versehen wird.

9. Verfahren nach Anspruch 6 oder 7, dadurch gekennzeichnet, daß das Pleul nach dem Kalibrieren durch mechanische Bearbeitung mit zumindest je einer Trenn- (11) bzw. Verlaufskerbe (18) versehen wird.

10. Verfahren nach Anspruch 6 oder 7, dadurch gekennzeichnet, daß das Pleul nach dem Endabkühlen durch mechanische Bearbeitung mit zumindest je einer Trenn- (11) bzw. Verlaufskerbe (18) versehen wird.

11. Verfahren nach einem der vorstehenden Ansprüche, dadurch gekennzeichnet, daß das Pleul durch Luft, Öl, Schutzgas oder Wasser abgekühlt wird.

12. Verfahren nach einem der vorstehenden Ansprüche, dadurch gekennzeichnet, daß zwischen zwei benachbarten Einzelteilen durch Bruch eine Trennfläche erzeugt wird.

13. Verfahren nach einem der vorstehenden Ansprüche, dadurch gekennzeichnet, daß die Trennstelle vor dem Trennen zumindest teilweise gekühlt wird.

14. Verfahren nach Anspruch 13, dadurch gekennzeichnet, daß die Außenseiten der Trennstelle zumindest teilweise einem strömungsfähigen Kühlmittel ausgesetzt werden.

15. Verfahren nach Anspruch 13, dadurch gekennzeichnet, daß die Trennstelle einem flüssigen Gas, vorzugsweise Stickstoff, ausgesetzt wird.

16. Verfahren nach einem der vorstehenden Ansprüche, dadurch gekennzeichnet, daß nach dem Abkühlen des Pleuels (16) im Pleuelkopf (13) Löcher (19) für Pleuelschrauben (15) angefertigt und die Pleuelschrauben (15) lose in den Löchern (19) montiert werden sowie anschließend die Trennfläche in der Trennfuge (12) des Pleuelkopfes (13) durch Bruchtrennung erzeugt wird.

17. Verfahren nach Anspruch 16, dadurch gekennzeichnet, daß ein Trennwerkzeug in den Pleuelkopf (13) eingeführt wird.

18. Verfahren nach Anspruch 16 oder 17, dadurch gekennzeichnet, daß die spanende Nachbearbeitung des Pleuels (16), insbesondere des Lagers des Pleuelkopfes (13) und des Pleuelauges (17), nach dem Trennen erfolgt.

19. Verfahren nach Anspruch 18, dadurch gekennzeichnet, daß vor der spanenden Nachbearbeitung des Pleuelkopfes (13) die Pleuelschrauben (15) fest montiert werden.

## Claims

1. A method for the manufacture of a sintered piston rod with a divided piston rod head, in which the piston rod is pressed from powder, sintered, cooled and without further compacting is divided into its individual parts, in which the piston rod is provided with at least one separating notch at the separating point in the region of the piston rod head and is separated into its individual parts by breaking at the separating point.

2. A method according to Claim 1, characterised in that in the region of the desired separating face and at a distance from the separating notch (11) at least one running notch (18) is provided.

3. A method according to Claim 1 or 2, characterised in that the piston rod, on pressing, is provided with at least one separating notch (11) or one running notch (18).

4. A method according to Claim 1 or 2, characterised in that the piston rod, between pressing and sintering, is provided by mechanical processing with in each case at least one separating notch (11) or running notch (18).

5. A method according to Claim 1 or 2, characterised in that the piston rod, after sintering, is provided by mechanical processing with in each case at least one separating notch (11) or running notch (18).

6. A method according to Claim 1 or 2, characterised in that the piston rod, after sintering, is intermediately cooled, calibrated, given a thermal treatment and is finally cooled.

7. A method according to Claim 6, characterised in that the piston rod, after calibrating, is heated to 800 to 1,100 °C and is then finally cooled.

8. A method according to Claim 6 or 7, characterised in that the piston rod, after sintering, is provided by mechanical processing with in each case at least one separating notch (11) or running notch (18).

9. A method according to Claim 6 or 7, characterised in that the piston rod, after calibrating, is provided by mechanical processing with in each case at least one separating notch (11) or running notch (18).

10. A method according to Claim 6 or 7, characterised in that the piston rod, after the final cooling, is provided by mechanical processing with in each case at least one separating notch (11) or running notch (18).

11. A method according to one of the preceding claims, characterised in that the piston rod is cooled by air, oil, protective gas or water.

12. A method according to one of the preceding claims, characterised in that between two adjacent individual parts a separating face is produced by breaking.

13. A method according to one of the preceding claims, characterised in that prior to separation, the separating point is cooled at least partially.

14. A method according to Claim 13, characterised in that the outer sides of the separating point are exposed at least partially to a cooling medium which is able to flow.

15. A method according to Claim 13, characterised in that the separating point is exposed to a fluid gas, preferably nitrogen.

16. A method according to one of the preceding claims, characterised in that after the cooling of the piston rod (16), holes (19) are made in the piston rod head (13) for piston rod screws (15) and the piston rod screws (15) are mounted loosely in the holes (19) and subsequently the separating face is produced in the separating line (12) of the piston rod head (13) through separation by breaking.

17. A method according to Claim 16, characterised in that a separating tool is introduced into the piston rod head (13).

18. A method according to Claim 16 or 17, characterised in that the subsequent working of the piston rod (16) by cutting, in particular of the bearing of the piston rod head (13) and of the piston rod eye (17), takes place after the separation.

19. A method according to Claim 18, characterised in that before the subsequent working of the piston rod head (13) by cutting, the piston rod screws (15) are securely mounted.

## Revendications

1. Procédé de fabrication d'une bielle frittée à tête de bielle en deux parties, la bielle étant fabriquée par compression à partir de poudre, frittée, refroidie et, sans compression supplémentaire, séparée en ses éléments individuels, la bielle étant pourvue à cet effet, au niveau du point de séparation dans la zone de la tête de bielle, d'au moins une entaille de séparation et étant séparée en ses éléments individuels par rupture au point de séparation.

2. Procédé selon la revendication 1, caractérisé en ce qu'il est prévu au moins une entaille continue (18) dans la zone de la surface de séparation souhaitée et à distance de l'entaille de séparation (11).

3. Procédé selon la revendication 1 ou 2, caractérisé en ce que lors de la compression, la bielle est pourvue d'au moins une entaille de séparation (11) ou une entaille continue (18).

4. Procédé selon la revendication 1 ou 2, caractérisé en ce que, entre la compression et le frittage, la bielle est pourvue, par traitement mécanique, chaque fois d'au moins une entaille de séparation (11) ou une entaille continue (18).

5. Procédé selon la revendication 1 ou 2, caractérisé en ce que, après le frittage, la bielle est pourvue, par traitement mécanique, d'au moins chaque fois une entaille de séparation (11) ou une entaille continue (18).

6. Procédé selon la revendication 1 ou 2, caractérisé en ce que, après le frittage, la bielle est soumise à un refroidissement intermédiaire, calibrée, soumise à un traitement thermique et soumise à un refroidissement final.

7. Procédé selon la revendication 6, caractérisé en ce que, après le calibrage, la bielle est portée à une température comprise entre 800 et 1 100°C et ensuite soumise au refroidissement final.

8. Procédé selon la revendication 6 ou 7, caractérisé en ce que, après le frittage, la bielle est pourvue, par traitement mécanique, d'au moins chaque fois une entaille de séparation (11) ou une entaille continue (18).

9. Procédé selon la revendication 6 ou 7, caractérisé en ce que, après le calibrage, la bielle est pourvue, par traitement mécanique, d'au moins chaque fois une entaille de séparation (11) ou une entaille continue (18).

10. Procédé selon la revendication 6 ou 7, caractérisé en ce que, après le refroidissement final, la bielle est pourvue, par traitement mécanique, d'au moins chaque fois une entaille de séparation (11) ou une entaille continue (18).

11. Procédé selon l'une des revendications précédentes, caractérisé en ce que la bielle est refroidie par de l'air, de l'huile, un gaz protecteur ou de l'eau.

12. Procédé selon l'une des revendications précédentes, caractérisé en ce que, entre deux éléments individuels voisins, une surface de séparation est produite par rupture.

13. Procédé selon l'une des revendications précédentes, caractérisé en ce que le point de séparation est refroidi au moins partiellement avant la séparation.

14. Procédé selon la revendication 13, caractérisé en ce que les faces externes du point de séparation sont exposées, au moins en partie, à un agent de refroidissement, fluide.

15. Procédé selon la revendication 13, caractérisé en ce que le point de séparation est exposé à un gaz liquéfié, de préférence de l'azote.

16. Procédé selon l'une des revendications précédentes, caractérisé en ce que, après le refroidissement de la bielle (16), des trous (19) pour boulons de tête de bielle (15) sont exécutés dans la tête de bielle (13), et les boutons de tête de bielle (15) sont montés lâches dans les trous (19), la surface de séparation étant ensuite obtenue dans la ligne de séparation (12) de la tête de bielle (13) par séparation par rupture.

17. Procédé selon la revendication 16, caractérisé en ce qu'un outil de séparation est introduit dans la tête de bielle (13).

18. Procédé selon la revendication 16 ou 17, caractérisé en ce que le traitement postérieur, par enlèvement de copeaux, de la bielle (16), et notamment du coussinet de la tête de bielle (13) et de l'oeil de pied de bielle (17), est effectué après la séparation.

19. Procédé selon la revendication 18, caractérisé en ce que les boulons de tête de bielle (15) sont montés fixes avant le traitement postérieur par enlèvement de copeaux de la tête de bielle (13).
